# EUROPÄISCHE PATENTANMELDUNG

(11) **EP 1 595 765 A1**
(43) Veröffentlichungstag der Anmeldung: **16.11.2005**
(21) Anmeldenummer: 05008268.4
(22) Anmeldetag: 15.04.2005
(51) Int. Cl.: B61D 43/00, B61G 9/20, B61G 11/18, H02K 35/00

(54) **Zug-und/oder Puffervorrichtung mit einem Stromgenerator**

(30) Priorität: 11.05.2004 DE 102004023721
(71) Anmelder: Teufl, Günther, Dr. med., 82131 Stockdorf (DE)
(72) Erfinder: Weckwerth, Guido, Dipl.-Ing., 82152 Planegg (DE); Teufl, Günther Dr. med, 82131 Stockdorf (DE)
(74) Vertreter: Eder, Thomas

(57) **Zusammenfassung**

Die Erfindung betrifft eine Zug- und/oder Puffervorrichtung zwischen zwei relativ zueinander bewegbaren Einheiten, insbesondere Güterwagen, wobei die Zug- und/oder Puffervorrichtung eine Energiewandlereinrichtung umfasst, welche wenigstens einen Teil einer auf die Zug- und/oder Puffervorrichtung einwirkenden kinetischen Energie in elektrische Energie umwandelt.

## Beschreibung

Die Erfindung bezieht sich auf eine Zug- und/oder Puffervorrichtung zwischen zwei relativ zueinander bewegbaren Einheiten, insbesondere Güterwagen bzw. Güterwagons.

Derartige Zug- und/oder Puffervorrichtungen bzw. Zug- und/oder Stoßvorrichtungen werden beispielsweise bei Güterzügen zwischen zwei benachbarten Wagen oder zwischen einem Wagen und der Lokomotive bzw. einem Triebwagen eingesetzt, um die auftretenden Abstandsänderungen aufgrund von Verzögerungen (Bremsen, Beschleunigen) oder aufgrund von Kurvenfahren etc. auszugleichen.

Insbesondere im Güterzugverkehr besteht die Problematik, dass eine Energieversorgung je Wagen bzw. Wagon wünschenswert wäre, um beispielsweise eine Onboard-Telemetrieeinrichtung (Sende- oder Sende- und Empfangseinrichtung) als Teil eines Telemetriesystems zu betreiben.

Ein solches Telemetriesystem, wie es beispielsweise im Lkw-Güterverkehr äußerst erfolgreich eingesetzt wird, ermöglicht eine Optimierung der zurückzulegenden Wege, der Ladekapazität, der Auslastung etc. und vermeidet unnötige Standzeiten sowie Fehlfahrten.

Um den Schienengüterverkehr konkurrenzfähig zum Güterverkehr auf der Straße zu gestalten, ist es daher wünschenswert ein derartiges Telemetriesystem auch im Schienengüterverkehr zu verwenden. Da hierfür Sende- oder Sende- und Empfangseinrichtungen pro Fördereinheit, also pro Güterwagen notwendig sind, entsteht der Bedarf nach einer Energieversorgung in einem einzelnen Güterwagen.

Nachteiligerweise existiert in den meisten herkömmlichen Güterwagen keine eigene autarke elektrische Energieversorgung oder ist nicht oder nur schwer zugänglich.

Obwohl seit mehreren Jahrzehnten Achsgeneratoren bekannt sind, bei welchen durch die Drehung der Achse als Teil eines Generators Strom erzeugt wird, werden diese bei Güterwagen nicht oder kaum eingesetzt. Nachteiligerweise ist hierfür statt der Verwendung herkömmlicher Standardachsen der Einbau spezieller kostenintensiver Achsen notwendig, da diese Achsen Teil des Generators sind. Zudem sind derartige Achsgeneratoren anfällig gegen äußere mechanische Beeinflussungen, wie Steinschlag etc., welche Beschädigungen oder gar Ausfälle der Stromversorgung zur Folge haben.

Weiterhin könnten Wagen mit einer Batterie bzw. einem Akku ausgerüstet werden, um die Stromversorgung für eine Telemetrieeinrichtung zu gewährleisten. Nachteiligerweise ist das Aufladen oder der Austausch der entladenen Batterie wartungsaufwändig und zudem durch das große Streckennetz nicht immer rechtzeitig gewährleistet, so dass die Stromversorgung und hiermit das angeschlossene Gerät, wie eine Telemetrieeinrichtung, ausfällt.

Der vorliegenden Erfindung liegt daher die Aufgabe zugrunde, für zwischen zwei relativ zueinander bewegbare Einheiten, insbesondere Güterwagen, auf einfache Weise eine autarke Energieversorgung zu schaffen.

Diese Aufgabe wird erfindungsgemäß durch eine Zug- und/oder Puffervorrichtung mit den Merkmale des Anspruchs 1 gelöst.

Durch die erfindungsgemäße Zug- und/oder Puffervorrichtung, welche zwischen zwei relativ zueinander bewegbaren Einheiten, insbesondere Güterwagen, angeordnet ist, kann wenigstens ein Teil der auf die Zug- und/oder Puffervorrichtung einwirkenden Energie mittels einer Wandlereinrichtung in elektrische Energie umgewandelt werden, um als Energieversorgung für andere Einrichtungen, insbesondere Telemetriesysteme (Funk, GPS, GSM etc.), zu dienen. Hierdurch kann vorteilhafterweise auf kostengünstige und einfache Weise durch Hinzufügung einer Wandlereinrichtung unter Verwendung von Standard-Zug- und/oder Puffervorrichtungen (ohne teuren Austausch von Achsen, etc.) eine autarke Stromversorgung gewährleistet werden.

In einer Ausgestaltung der Erfindung kann die einwirkende kinetische Energie in thermische und/oder kinetische Energie mittels eines thermischen und/oder kinetischen Energiespeichers zwischengespeichert werden. Hierdurch kann die u.a. stoßartig auftretende kinetische Energie besser verarbeitet werden, wobei ein thermischer Energiespeicher bereits in herkömmlichen Zug- und/oder Puffervorrichtungen durch das aufgrund der auftretenden Verlustwärme erwärmte Material der Zug- und/oder Puffervorrichtung (Gehäuse, Feder, Stößel etc.) vorhanden ist. Als kinetischer Speicher kommen beispielsweise je nach auftretender Kraft in der jeweiligen Maximalposition einrastende Federelemente o.ä. in Frage, welche die Energie bei Bedarf und insbesondere gleichförmiger abgeben können. Durch einen solchen thermischen und kinetischen oder auch pneumatischen Speicher kann, abgesehen von der Abgabe der gespeicherten Energie bei Bedarf bzw. auf Anfrage, die Energie vorteilhafterweise unabhängig von der Form der einwirkenden kinetischen Energie (z.B. stoßartig), insbesondere auch als im Wesentlichen gleichförmige kontinuierliche Energie abgegeben werden.

In bevorzugter Ausgestaltung der Erfindung ist eine Wandlereinrichtung wenigstens teilweise oder gar insgesamt innerhalb der Zug- und/oder Puffervorrichtung angeordnet. Hierdurch ist die erfindungsgemäße autarke Stromversorgung in besonderem Maße gegen mechanische Einwirkungen wie Steinschlag etc. geschützt.

In weiterer Ausgestaltung der Erfindung ist die Wandlereinrichtung in den Hohlraum einer herkömmlichen Zug- und/oder Puffervorrichtung einsetzbar. Hierdurch ist es vorteilhafterweise möglich, kostengünstige Standardbauteile zu verwenden, wobei zudem vorhandene Zug- und/oder Puffervorrichtungen auf einfache und kostengünstige Art und Weise zu erfindungsgemäßen Zug- und/oder Puffervorrichtungen nachrüstbar sind.

In bevorzugter Ausgestaltung der Erfindung ist die Wandlereinrichtung mit einer elektrischen Ladeeinrichtung und einer elektrischen Speichereinrichtung, wie beispielsweise eine Batterie, einem Akku, einem Kondensator etc. verbunden. Hierdurch kann vorteilhafterweise auf einfache Art und Weise eine permanent verfügbare, gleichförmige Stromversorgung mit gleichbleibender Stärke gewährleistet werden.

Als Wandlereinrichtung kommen unterschiedlichste Energiewandler, wie beispielsweise Peltierelemente, Wärmepumpe (Unterschied der Temperatur der Zug- und/oder Puffervorrichtung und der Umgebungstemperatur), Piezokristalle, elektrische Generatoren, insbesondere Linear- oder Drehgenerator etc. allein oder in beliebiger Kombination miteinander in Frage. Bei Umwandlung (allein oder zusätzlich) wenigstens eines Teils der in der Zug- und/oder Puffervorrichtung aufgrund der einwirkenden kinetischen Energie entstehenden Wärme kann vorteilhafterweise diese in jedem Fall in der Zug-und/oder Puffervorrichtung entstehende Verlustwärme ausgenutzt werden.

Nach der Erfindung ist es möglich, die auf die Zug- und/oder Puffervorrichtung einwirkende kinetische Energie in elektrische Energie umzusetzen, um als Stromversorgung für beliebige elektrische Einrichtungen, insbesondere eine Telemetrieeinrichtung zu dienen. Hierbei kann die kinetische Energie in beliebiger Form, insbesondere stark stoßartig auf die erfindungsgemäße Zug- und/oder Puffervorrichtung einwirken. Derartige Stöße treten beispielsweise im Schienengüterverkehr zwischen den Wagen oder einem Wagen und dem Triebwagen bzw. der Lokomotive häufig, beispielsweise bis zu mehrmals pro Kilometer auf. Diese Stöße oder auch gleichförmigeren Kräfte (Druck und Zug) entstehen durch Verzögerungen (Beschleunigungs- und Bremsvorgänge) des gesamten Güterzuges und/oder relativen Verzögerungen der Wagen zueinander sowie durch auftretendes Gefälle und insbesondere bei Kurven, in denen die jeweils äußeren Zug- und/oder Puffervorrichtung auseinandergezogen und die innere Zug- und/oder Puffervorrichtung zusammengedrückt werden.

Da ein derartiger Stoß einen hohen Energiewert von beispielsweise bis zu 40 kJ besitzt, reicht für die Stromversorgung von Schwachstromeinrichtungen mit geringer Energieaufnahme bereits eine Umwandlung eines geringen Teils dieser hohen kinetischen Energie, beispielsweise im Prozent- oder gar Promillebereich, in verfügbare elektrische Energie.

Selbstverständlich ist die erfindungsgemäße Zug- und/oder Puffervorrichtung nicht nur im Schienenverkehr einsetzbar sondern in beliebigen Fällen anwendbar, in denen eine Energieversorgung fehlt oder nur schwer zugänglich ist und bei denen wenigsten zwei Einheiten sich relativ zueinander bewegen. So wäre es auch denkbar die erfindungsgemäße Zug- und/oder Puffervorrichtung in Containerreihen oder -zügen z.B. am Flughafen oder in Lagern einzusetzen.

In der Anwendung im Schienengüterverkehr kann die Erfindung vorteilhafterweise zur Energieerzeugung bzw. Energieversorgung elektrischer Geräte, insbesondere von Telemetrieeinrichtungen verwendet werden. Hierdurch können wagenspezifische Daten wie Laufleistung, Lage, Position (z.B. bestimmt mittels GPS oder GSM), Bewegungsinformationen, Ladungsinformationen (Füllmenge, Warenart etc.), Betriebsparameter (Radlagertemperatur, Entgleisung etc.) zu einer Verarbeitungs- und Steuerzentrale, insbesondere per Funk übermittelt werden. Auf diesem Wege ist es vorteilhafterweise möglich, den Schienengüterverkehr insbesondere in Bezug auf Auslastung, Verfügbarkeit, Koordination etc. zu optimieren.

Weitere vorteilhafte Ausgestaltungen der Erfindung ergeben sich aus den Unteransprüchen.

Die Erfindung wird nachfolgend anhand in der Zeichnung dargestellter Ausführungsformen näher erläutert.

In der Zeichnung zeigen:
- Fig. 1: eine schematische Schnittansicht einer erfindungsgemäßen Puffervorrichtung,
- Fig. 2: eine schematische Schnittansicht einer erfindungsgemäßen Zugvorrichtung,
- Fig. 3: eine schematische Seitenansicht zweier miteinander gekoppelter Zugvorrichtungen,
- Fig. 4: eine schematische Draufsicht einer Normalkupplung (Regelspur),
- Fig. 5: eine schematische Draufsicht auf eine Kurzkupplung (Regelspur) und
- Fig. 6: eine schematische Draufsicht auf eine Kupplung einer Schmalspurbahn.

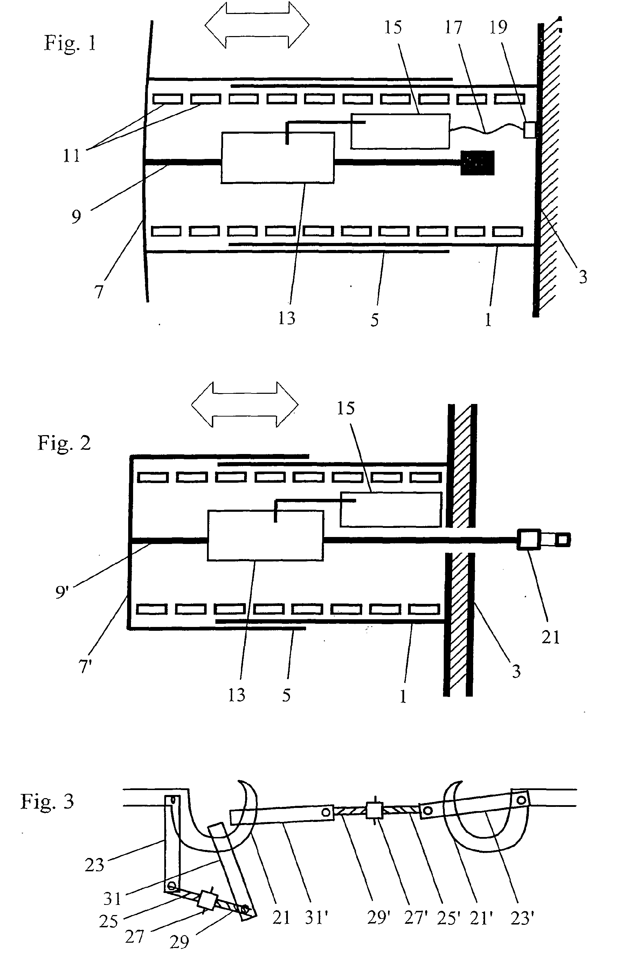

Wie in Fig. 1 dargestellt, besteht ein Puffer bzw. eine Puffervorrichtung, insbesondere ein Puffer eines Zugwagons, aus einem Fuß 1 des Puffers, welcher an einer Pufferbohle 3 befestigt ist. Auf diesem meist hohlzylindrischen Fuß 1 ist ein ebenfalls meist hohlzylindrischer Topf 5 des Puffers mit größerem Innendurchmesser als der Außendurchmesser des Fußes 1 aufgesetzt, so dass sich der Topf 5 auf dem Fuß 1 in Längsrichtung (siehe Doppelpfeil) der Puffervorrichtung hin und her bewegen lässt.

Innerhalb der Anordnung aus Fuß 1 und Topf 5 des Puffers befinden sich Federelemente 11, beispielweise in Form einer Ringfeder, um einem Zusammendrücken des Puffers mit Federkraft entgegenzuwirken.

Den stirnseitigen Abschluss des Topfes 5 bildet ein Pufferteller 7, welcher meist konvex ausgebildet ist, um bei Berührung mit einem baugleichen Puffer des benachbarten Wagons und Punktberührung der gegenüberliegenden Pufferteller 7 auch bei Kurven oder Gefälle eine entsprechende Bewegung und Verlagerung der Punktberührung ohne Verkeilung zu gestalten.

Im Inneren des Topfes 5 befindet sich beispielsweise in mittiger und konzentrischer Anordnung ein Pufferstößel 9, welcher mit dem Pufferteller 7 bzw. dessen Mitte verbunden ist. Dieser Pufferstößel 9 weist eine geringere Länge auf als der innere Abstand zwischen Pufferteller 7 und Pufferbohle 3, in welchem die Feder 11 gegen ein Zusammendrücken wirkt.

Durch den Stößel 9, welcher an seinem freiliegenden Ende, wie in Fig. 2 ersichtlich, eine Verdickung, beispielsweise in Form einer Mutter, aufweist, ist im Zusammenwirken mit einer in diesem Bereich angeordneten Hülse, welche in der schematischen Zeichnung nicht näher dargestellt ist, auch bei einem Auseinanderziehen des Puffers über den Federweg der Feder 11 hinaus ein Auseinanderfallen der Feder und des Puffers verhindert. Diese Hülse oder Teller sitzt so am Ende des Stößels 9 und ist gegen ein Heruntergleiten durch die Verdickung gesichert. Im Randbereich des Tellers oder der Hülse greift die Feder 11 an, so dass diese Feder auch bei einem Auseinanderziehen des Puffers gegen ein Auseinanderfallen gesichert ist.

Ein derartiger Puffer ist meist durch eine Längsführung zwischen der Innenseite des Topfes 5 und Außenseite des Fußes 1 gegen ein Verdrehen bzw. eine Rotation gesichert und weist zudem eine in der Zeichnung nicht näher dargestellte Sicherung gegen ein Abziehen des Topfes 5 vom Fuß 1 auf.

Die vorgenannten Teile sind bei einem herkömmlichen Puffer, beispielsweise eines Güterwagons, Standard und demzufolge bereits vorhanden. In einem Puffer nach der Erfindung befindet sich zusätzlich zu den vorgenannten Teilen eine Energiewandlereinrichtung 13, beispielsweise in Form eines Lineargenerators, durch welchen die Stange des Stößels 9 in Längsrichtung beweglich hindurchreicht bzw. an ihr angeordnet ist. Bei Bewegung in Längsrichtung des Stößels 9 infolge einer Kompression als auch einer Expansion (Zurückbewegung aufgrund Federkraft) des Puffers, wird die kinetische Energie dieser Bewegung zumindest teilweise in elektrische Energie umgewandelt.

Wie dargestellt ist die Wandlereinrichtung 13 mit einer eine Ladeschaltung umfassenden elektrischen Energiespeichereinrichtung 15, insbesondere in Form wenigstens eines Akkumulators verbunden, so dass die umgewandelte elektrische Energie mittels der Ladeschaltung in dem Akku gespeichert wird. Hierdurch kann für elektrische Einrichtungen, insbesondere für eine Telemetrieeinrichtung bzw. Sende- oder Sende- und Empfangseinrichtung, eine Stromversorgung gewährleistet werden, welche je Puffer und/oder Zugvorrichtung bzw. einer damit verbundenen Einheit, insbesondere ein Güterwagon, autark ist.

Um eine Verbindung aus dem Inneren des Puffers nach außen für außerhalb des Puffers befindliche elektrische Einrichtungen zu schaffen, ist die Speichereinrichtung 15 über ein Kabel 17 mit einer Anschlusseinrichtung 19 verbunden, welche von außen, beispielsweise durch die Pufferbohle 3, zugänglich ist, um mit einer elektrischen Einrichtung verbunden zu werden. Selbstverständlich ist es auch denkbar, den elektrischen Anschluss der Speichereinrichtung 15 auf andere Art, beispielsweise durch den Fuß 1 des Puffers, nach außen zu führen oder eine zu versorgende elektrische Einrichtung innerhalb des Puffers anzuordnen. Ebenfalls ist es denkbar, Teile der Speichereinrichtung 15, insbesondere den Akku oder die Batterie, außerhalb des Puffers so anzuordnen, wobei selbstverständlich zu den im Inneren des Puffers verbleibenden Teilen eine elektrische Verbindung mittels entsprechender Kabel gewährleistet sein muss.

Die in Fig. 2 dargestellte Zugvorrichtung bzw. Zughakenvorrichtung unterscheidet sich von der in Fig. 1 dargestellten Puffervorrichtung im wesentlichen durch einen Topf 7', welcher nicht als konvexer Teller 7, sondern als flacher Boden ausgeführt ist. Zudem erstreckt sich der Stößel 9' der Zugvorrichtung im Unterschied zum Stößel 9 des Puffers durch die Bohle 3 hindurch, wobei sich am herausragenden Ende des Stößels 9' ein Zughaken 21 befindet.

Selbstverständlich ist auch bei der in Fig. 2 dargestellten Zugvorrichtung ein elektrischer Anschluss in nicht näher dargestellter Weise, beispielsweise durch den Fuß 1, den Topf 5, den Boden 7' oder die Bohle 3 nach außen geführt, um ebenso, wie vorstehend für den Puffer beschrieben, eine Anschlussmöglichkeit für beliebige elektrische Einrichtungen zu bieten.

Wird die Zugvorrichtung nach Fig. 2 durch ein Ziehen am Haken 21 in Längsrichtung von der Pufferbohle 3 weg mit einer Kraft beaufschlagt, wird die Zugvorrichtung gegen die Federkraft der Feder 11 zusammengedrückt. Sowohl bei dieser Kompression der Zugvorrichtung, als auch bei einer Expansion durch Entlastung am Haken 21, wird diese Bewegung bzw. diese kinetische Energie ebenso wie vorstehend im Fall des Puffers beschrieben, im Wandler 13 zumindest teilweise, beispielsweise im Prozent- oder gar nur im Promillebereich der kinetischen Energie in elektrische Energie umgewandelt und in der Speichereinrichtung 15 gespeichert.

In Fig. 3 ist zum besseren Verständnis beschrieben, wie zwei Zughaken 21 und 21' benachbarter Wagons oder eines Wagons mit einer Lokomotive gekoppelt sind. Hierzu weisen die Haken 21 und 21' jeweils eine erste Lasche 23 und 23' auf, welche am Zughaken 21, 21' an einem Ende in der Zeichenebene schwenkbar gelagert ist. Das gegenüberliegende Ende der Lasche 23, 23' ist mittels zweier Gewindestangen mit gegenläufigen Gewinden 25, 29 bzw. 25', 29' und einer Verstellschraube bzw. Verstellmutter 27, 27' mit einer zweiten Lasche 31, 31' verbunden, welche wiederum an ihrem einen Ende in der Zeichenebene schwenkbar gelagert ist. Um zwei Haken miteinander zu verbinden, ist es, wie in Fig. 3 dargestellt, nur nötig, eine der beiden zweiten Laschen 31, 31' über den anderen Haken 21, 21' zu legen, so dass die Haken 21, 21' nur gegen Zug miteinander verbunden sind, wobei der Abstand dieser Verbindung über die Verstellschraube 27 bzw. 27' veränderbar ist.

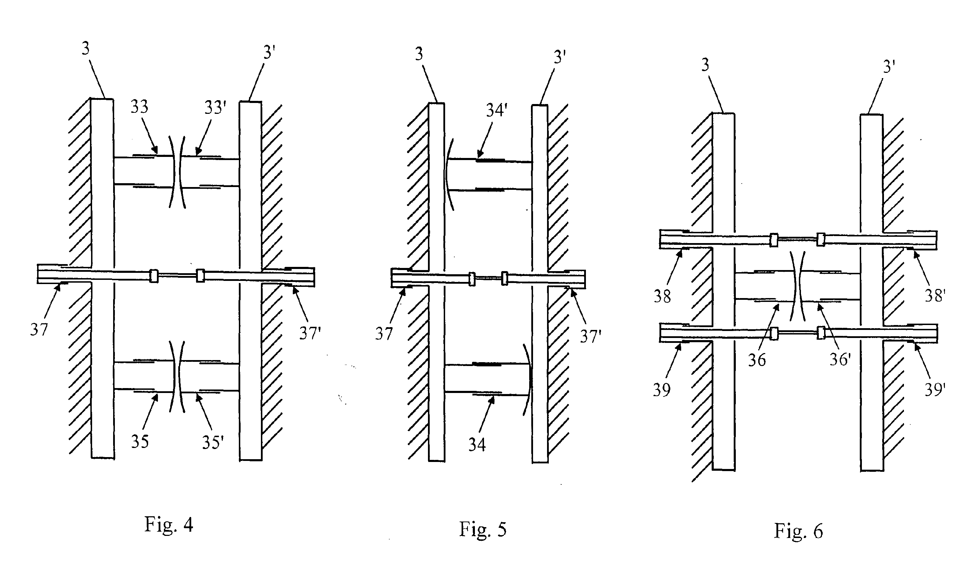

In Fig. 4 bis 6 sind unterschiedliche Arten von Kupplungen dargestellt, bei welchen jeweils eine oder mehrere Puffervorrichtungen nach Fig. 1 und Zugvorrichtungen nach Fig. 2 zum Einsatz kommen.

Die in Fig. 4 dargestellte Kupplung betrifft eine sogenannte Normalkupplung einer Regelspur, wobei zwei benachbarte Wagons bzw. Lokomotive und Wagon mittig über ihre Zug(haken)vorrichtung 37 und 37' gegen Zug verbunden sind. Gegen Druck sind die beiden Wagons bzw. deren Bohlen 3, 3' mittels links- und rechtsseitig bzw. in der in der Zeichnung dargestellten Draufsicht oberhalb und unterhalb der in Zugvorrichtung 37, 37' angeordneten, jeweils entgegen gerichteten Puffer 33, 33', sowie 35, 35' gekoppelt.

Die dargestellten Puffervorrichtungen 33, 33', 35, 35' und Zugvorrichtungen 37, 37' werden in der bekannten Zugpraxis bei Verzögerungen des gesamten Zuges oder einzelner Wagons aufgrund unterschiedlicher Relativbewegungen (Beschleunigen, Bremsen, Unterschiede im Gefälle etc.) mit Kraft beaufschlagt, welche wie vorstehend erläutert in den erfindungsgemäßen Zug und/oder Puffervorrichtungen in elektrische Energie umgewandelt und gespeichert wird. Weiterhin können Kräfte bzw. unterschiedliche Bewegungen, welche beim Kurvenfahren auftreten und durch die entsprechend die an einer Seite der mittleren Zugvorrichtung 37, 37' angeordneten Puffer 35, 35' zusammengedrückt bzw. auseinandergezogen werden (Zurückgehen bis maximal zur Ausgangslage ohne Federkraft) die Puffer der anderen Seite 33, 33' entsprechend expandieren bzw. komprimiert werden.

Die in Fig. 5 dargestellte Kurzkupplung der Regelspur unterscheidet sich von der in Fig. 4 dargestellten Normalkupplung nur bezüglich der Puffervorrichtungen, wobei hier links- und rechtsseitig bzw. ober- und unterhalb der Zughakenvorrichtung 37, 37' jeweils nur eine Puffervorrichtung 34' (oben) und 34 (unten) vorgesehen ist. Bei dieser Kupplungsart drücken nicht entgegengesetzt (mit ihren Puffertellern) gerichtete Puffer aufeinander, sondern jeweils die Puffervorrichtung 34 eines Wagens mit seiner Pufferbohle 3 direkt gegen die Pufferbohle 3' eines benachbarten Wagens und auf der anderen Seite der Zugvorrichtung 37, 37' die Puffervorrichtung 34' der Pufferbohle 3' gegen die Pufferbowle 3 des ersten Wagens. Prinzipiell unterscheiden sich die Bewegungsvorgänge und die hierdurch jeweils mögliche Energieumwandlung und Speicherung bei dieser Kurzkupplung nicht von der vorstehend beschriebenen Normalkupplung gemäß Fig. 4.

Fig. 6 zeigt eine weitere, bei Schmalspurbahnen bekannte Kupplungsart, wobei zwei Wagen bzw. ein Wagen und eine Lokomotive anstatt mittig mit Zugvorrichtungen mittig mit Puffervorrichtungen 36, 36' gegen Druck miteinander gekoppelt sind und außenliegend gegen Zug mit Zugvorrichtung 38, 38' (oben) und 39, 39' (unten) verbunden sind. Diese Kupplungsform stellt prinzipiell eine Invertierung der in Fig. 4 dargestellten Normalkupplung dar, wobei die Bewegungen ebenso, wie vorstehend beschrieben, verlaufen und demzufolge ebenso zu einer Energieumwandlung und Speicherung in den erfindungsgemäßen Puffer- und Zugvorrichtungen führen.

Selbstverständlich sind die dargestellten Zug- und Puffervorrichtungen 33 bis 39 und die entsprechenden Kupplungsarten nur beispielhaft anzusehen, wobei es auch denkbar ist, statt einer getrennten Zug- und Puffervorrichtung eine kombinierte Zug- und Puffervorrichtung auszubilden, welche ebenso wie die vorstehend beschriebenen Zug- und Puffervorrichtungen nicht nur im Güterschienenverkehr, sondern in beliebigen Gebieten mit relativ zueinander bewegbaren Einheiten, welche miteinander bewegbar gekoppelt werden sollen, anwendbar ist.

Besonders vorteilhaft ist die vorstehend beschriebene Anwendung der Erfindung im Güterschienenverkehr, da hierbei vorhandene Puffer- und/oder Zugvorrichtungen aus Standardteilen bestehen, so dass sowohl die Herstellung der erfindungsgemäßen Puffer-und/oder Zugvorrichtungen als auch ein denkbares Nach- oder Umrüsten bestehender Puffer- und/oder Zugvorrichtungen zu erfindungsgemäßen Puffer- und/oder Zugvorrichtungen sich unter Verwendung von diesen Standardbauteilen besonders kostengünstig gestalten läßt.

## Patentansprüche

1. Zug- und/oder Puffervorrichtung zwischen zwei relativ zueinander bewegbaren Einheiten, insbesondere Güterwagen,
**dadurch gekennzeichnet, dass**
die Zug- und/oder Puffervorrichtung eine Energiewandlereinrichtung (13) umfasst, welche wenigstens einen Teil einer auf die Zug- und/oder Puffervorrichtung einwirkenden kinetischen Energie in elektrische Energie umwandelt.

2. Zug- und/oder Puffervorrichtung nach Anspruch 1, **dadurch gekennzeichnet, dass** die einwirkende kinetische Energie in thermische und/oder kinetische Energie mittels eines thermischen und/oder kinetischen Energiespeichers zwischengespeichert wird.

3. Zug- und/oder Puffervorrichtung nach Anspruch 1 oder 2, **dadurch gekennzeichnet, dass** eine Wandlereinrichtung (13) wenigstens teilweise innerhalb der Zug-und/oder Puffervorrichtung angeordnet ist.

4. Zug- und/oder Puffervorrichtung nach einem der vorhergehenden Ansprüche, **dadurch gekennzeichnet, dass** die Wandlereinrichtung (13) in den Hohlraum einer herkömmlichen Zug- und/oder Puffervorrichtung einsetzbar ist.

5. Zug- und/oder Puffervorrichtung nach einem der vorhergehenden Ansprüche, **dadurch gekennzeichnet, dass** die Wandlereinrichtung (13) mit einer eine elektrischen Ladeeinrichtung umfassende elektrischen Speichereinrichtung (15) verbunden ist.

6. Zug- und/oder Puffervorrichtung nach einem der vorhergehenden Ansprüche, **dadurch gekennzeichnet, dass** die Wandlereinrichtung (13) wenigstens ein Peltierelement umfasst.

7. Zug- und/oder Puffervorrichtung nach einem der vorhergehenden Ansprüche, **dadurch gekennzeichnet, dass** die Wandlereinrichtung (13) einen elektrischer Generator umfasst.

8. Zug- und/oder Puffervorrichtung nach einem der vorhergehenden Ansprüche, **dadurch gekennzeichnet, dass** die kinetische Energie in stoßartiger Form einwirkt.
